# EUROPEAN PATENT APPLICATION

(11) **EP 0 568 161 A1**
(43) Date of publication of application: **03.11.1993**
(21) Application number: 93202218.9
(22) Date of filing: 14.01.1992
(51) Int. Cl.: G06F 15/401, G06F 15/403

(54) **Interctive desktop system**

(30) Priority: 14.01.1991 GB 9100733
(62) Divisional of application: 92300302.4
(71) Applicant: XEROX CORPORATION, Rochester New York 14644 (US)
(72) Inventor: Wellner Pierre, Cambridge CB4 3DH (GB); Newman, William Maxwell, Blandford Forum, Dorset (GB); Lamming, Michael G., Cambridge CB2 2RN (GB)
(74) Representative: Goode, Ian Roy

(57) **Abstract**

An interactive desktop system for processing visual information, comprising a work surface (54), a camera (50;60) for sensing visual information located on the work surface (54), and a projector (52) for forming visual images on the work surface (54). Processing means (62, 64), coupled to the camera (50;60) and to the projector (52), encodes and stores data corresponding to the visual information for selective retrieval and decoding; the processing means (62, 64) being further adapted for modifying said visual images in response to one or more functions selected by a user of the system by carrying out various manual operations within the field of view of the camera.

## Description

This invention relates to an interactive desk top system for processing documents and data in visual form.

For desk workers and people attending meetings, access to certain functions (e.g. manipulation of the text of a document) is currently available only *via* display screens: not paper.

There is a need for an interactive system that can deal with any incoming paper document or print-out of an electronic document, and that can provide access to a number of computer-based functions and services. This is particularly so in meeting rooms, where use of paper documents is a firmly-entrenched practice.

The present invention provides an interactive system for processing visual information, comprising: a work surface; means for sensing visual information located on the work surface; means for forming visual images on the work surface; processing means, coupled to the sensing means and to the image forming means, for encoding and storing data corresponding to the visual information for selective retrieval and decoding; wherein the processing means is adapted for modifying said visual images in response to one or more functions selected by a user of the system.

The processing means preferably includes a data store, and the processing means is adapted for operating on the stored data in response to the selected function(s) and for outputting data corresponding to modified visual images to the image forming means.

The system preferably includes means for selecting a function to be performed by the system by selecting a zone of the visual image on the surface. Preferably, the zone comprises a single item from a displayed menu within the visual images, said item corresponding to an operation to be performed on said visual images or stored data.

Alternatively, the selected zone may comprise a portion of text or graphics within a document or said visual images.

The sensing means preferably includes means for recognising graphical or hand printed character information written on the work surface.

The system preferably includes a tablet forming part of the work surface, and a stylus, coupled to the tablet and operable by the user, for entering zone selections or graphical information representing, or the subject of, a selected function.

Preferably, the image forming means comprises a projector supplied with video data by the processing means.

The visual information may comprise the content of a document on said work surface. Preferably, the system includes: means for constructing time-stamped records identifying document pages and indicating operations on the documents; means for encoding and storing the records for later selective retrieval and decoding; and means for enabling identification of the document contents from a record.

Preferably, the sensing means comprises a video camera. Preferably, the processing means includes a frame store.

The sensing means may include a high resolution document scanner, for example located on the desktop. The system may include means for collecting audio signal and other data from the user representing, or the subject of, a selected function.

The present invention further provides a method according to claim 10 of the appended claims.

The present invention further provides a programmable apparatus when suitably programmed for carrying out the method of claim 10.

This invention can be compared either with workstation-based interaction or with traditional paper-based work practice. As an alternative to workstation-based interaction, it has the advantage that it can deal with any paper document, or print-out of an electronic document. Compared with paper-based methods, it has the advantage of providing access to a number of computer-based functions and services. It has particular advantages in meeting rooms, where use of paper documents is a firmly-entrenched practice.

The invention may include activity-based indexing of data sets (and particularly documents or sets of documents), in order to facilitate the fast retrieval at a later date of data (documents) of interest. The system is based on devising pattern-matching techniques for constructing recognisable episodes from raw data. In this way it offers the user the means to arrive quickly at a particular point in one dataset, possibly in order to be able to obtain access more efficiently and quickly into at least one other dataset. This speed of access is one of the essential requirements in making the technique of practical value. Further details of the indexing and retrieval system which may be used in the present invention is disclosed in EP-A-495 622.

The present invention will now be described, by way of example, with reference to the accompanying drawings, in which:
Figure 1 is a diagrammatic view of part of a system of the present invention in which the activity being monitored is the presence of various documents on the user's workspace, with at least descriptors of those documents being stored to complement the other data assisting in later retrieval; and
Figures 2(a) to (c) are partial displays of a typical output of the Fig. 1 system.

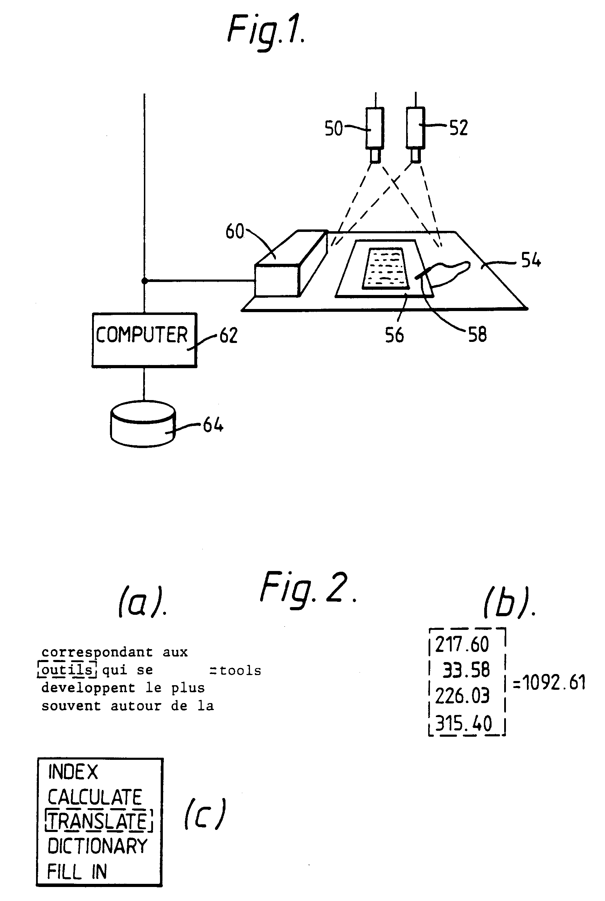

Fig. 1 shows the system which exploits scanning and image-processing technology to read the contents of documents on a deck surface: the user is then able to interact with these contents using a pointer such as a tablet and stylus. A wide range of interaction techniques may be used, including menu selection and dialogue boxes, graphical selection and hand printed character recognition. Moreover, the user is also free simply to write on documents with a pen or with an ink pen in the stylus. Particular tasks for which the system could be effective include: selecting key words for document filing; performing calculations on numeric data; translating foreign words, looking up technical terms in dictionaries, checking and filling in forms, retrieving other documents or information that cannot be printed, e.g. audio or video. The invention could therefore give desk workers and people attending meetings access to functions that are currently available only *vi*a work stations. The apparatus shown in Fig. 6 includes a video camera 50 and a video projector 52 mounted above a desk 54 at which the user sits, a data tablet 56 with a stylus 58, a high-resolution scanner 60, and a control computer 62 with its data store or memory 64 for images.

The camera 50 is mounted so that it field of view includes the document on the desk 54 in front of the user. The video signal is digitised using a frame store, creating a bit map image of the document. Digital filtering techniques are applied to the image, first to determine size and rotation, and then to classify the document according to properties such as line spacing, line-length distribution, etc. Application of these techniques provides (a) a compact resolution-independent encoding of the images properties for use as a descriptor, and (b) orientation and position information. The data tablet 56 and stylus 58 permit the user to select items such as words or columns of numbers. When the user makes a selection as by pressing down on the tablet surface, the coordinates of the stylus 58 are transformed, using the inverse of the rotation and position information, to determine the selection in the coordinates of the page.

If the image scanned in from the camera 50 is of insufficient resolution to support interaction, the document can be scanned in at high resolution. This operation is done *vi*a the scanner 60, and it could be performed on the entire contents of the user's in-tray before a work session, or on an entire set of meeting papers before a meeting starts. The same digital filtering techniques as before are applied to the high-resolution page image to construct a descriptor and to correct for rotation. Optical character recognition (OCR) is applied to extract the text of the document. This text is stored for later use, indexed by the document descriptor. The page coordinates of each text item are included with the stored text.

The memory 64 contains layout information for each document page entered into the system, indexed by descriptor. The user need not apply high-resolution scanning or OCR to a document page that is already stored. As soon as the descriptor has been generated from the video scanned data, the existence of a stored version can be determined. Layout information describing computer-generated documents can be written directly to the memory 64, and descriptors generated, without recourse to scanning or OCR.

The descriptor of each page of a multi-page document, or of each single document, is non-unique, but is designed to ensure that descriptors are rarely duplicated. Descriptors for pairs of document images may be compared using a correlator to determine if the two images are of the same document. When the user selects an item with the stylus, the corrected coordinates are used to identify the text item in the stored version. The appropriate function (translation, indexing, etc.) can then be applied to the item. The system can also supply hand-printing recognition to the stylus input, or record changes to the scanned image resulting from conventional handwriting.

Feedback to the user is provided *via* the video projector 52. Examples of such feedback are shown in Fig. 2. Results of translations (Fig. 2a) or calculations (Fig. 2b) would normally be shown alongside the text. If space permits (and the system can determine this) the results could be displayed directly above the selected item. The video projector 52 also displays menus and dialogue boxes (see Fig. 2c) for interactive control.

Each time the user places a new document on the tablet, or turns the pages of a multi-page document, the system can detect the change in the video-scanned image and then recompute the image's descriptor. It searches for a matching descriptor in its file of documents. Thus if it finds a match, it retrieves the document. If, on the other hand, no match is found, it signals to the user to feed the document into the scanner 60.

The "audit trail" left by the system provides a source of data about the user's interaction with paper documents. These data can be used to construct episodes in which paper documents are identified either by selected key words or by optically-read contents. Reference is made to the sub-system shown in Fig. 8 of EP-A-495 622, which uses the data from the computer 62 and memory 64 of the Fig. 6 embodiment. The computer feeds raw document events to a document episode recogniser 66, the events including descriptors, commands and selected data. The recogniser builds episodes from consecutive events applied to the same document; episode descriptions include time-stamp, descriptor and type of episode (including reading, editing, filing, calculating). The diary composer 14 takes episodes describing individual document pages and builds episodes describing activity on multi-page documents and on folders of documents.

A microphone 68 may be carried by a user, as disclosed with reference to the Fig. 9 system of EP-A-495 622, and the level of the audio signal produced by the microphone is monitored by means of a circuit of the type used in cassette recorders.

## Claims

1. An interactive system for processing visual information, comprising:
a work surface (54);
means (50;60) for sensing visual information located on the work surface (54);
means (52) for forming visual images on the work surface (54);
processing means (62, 64), coupled to the sensing means (50;60) and to the image forming means (52), for encoding and storing data corresponding to the visual information for selective retrieval and decoding;
wherein the processing means (62, 64) is adapted for modifying said visual images in response to one or more functions selected by a user of the system.

2. A system as claimed in claim 1, in which the processing means (62, 64) includes a data store (64), and the processing means is adapted for operating on the stored data in response to the selected function(s) and for outputting data corresponding to modified visual images to the image forming means (52).

3. A system as claimed in claim 1 or 2, including means for selecting a function to be performed by the system by selecting a zone (Fig.7) of the visual image on the work surface.

4. A system as claimed in claim 3, wherein the zone comprises a single item from a menu (Fig.7(c)) within the visual images, said item corresponding to an operation to be performed on said visual images or stored data.

5. A system as claimed in claim 3, wherein the selected zone comprises a portion of textual or graphical information (Figs 7(a),(b)) within a document, for example a paper document, or said visual images.

6. A system as claimed in any preceding claim, wherein the sensing means (50;60) includes means for recognising graphical or printed character information written on the work surface.

7. A system as claimed in any preceding claim, including a tablet forming part of the work surface, and a stylus, coupled to the tablet and operable by the user, for entering zone selections or graphical information representing, or the subject of, a selected function.

8. A system as claimed in any preceding claim, wherein the image forming means (52) comprises a projector supplied with video data by the processing means.

9. A system as claimed in any preceding claim, wherein the visual information comprises the content of a document on said work surface.

10. A method of operating a system that includes:
a work surface (54);
image receiving circuitry (50; 60) for providing input signals indicating images that show the work surface (54);
image providing circuitry (52) for providing output signals defining images to be presented to a user on the work surface (54); and
a processor (62; 64) connected to the image receiving circuitry and to the image providing circuitry;
the method comprising:
providing first output signals to the image providing circuitry; the first output signals defining a first image;
receiving first input signals from the image receiving circuitry; the first input signals indicating an image that shows the first image as presented on the work surface;
using the first input signals to obtain request signals indicating a request by the user; and
responding to the request signals by using the first input signals to obtain second output signals defining a modified version of the first image and by providing the second output signals to the image providing circuitry.
